# EUROPEAN PATENT SPECIFICATION

(11) **EP 4 618 648 B1**
(45) Date of publication and mention of the grant of the patent: **04.11.2026**
(21) Application number: 25192397.5
(22) Date of filing: 24.11.2021
(51) Int. Cl.: H04L 41/14, H04W 64/00

(54) **DERIVING ANALYTICS FOR MOBILITY EVENTS**
ABLEITUNG VON ANALYSEN FÜR MOBILITÄTSEREIGNISSE
DÉRIVATION D'ANALYSES POUR ÉVÉNEMENTS DE MOBILITÉ

(30) Priority: 12.10.2021 GR 20210100693
(43) Date of publication of application: 17.09.2025
(62) Document number(s) of the earlier application(s) in accordance with Art. 76 EPC: 21820175.4 / 4 416 909
(73) Proprietor: Lenovo (Singapore) Pte. Ltd., Singapore 556741 (SG)
(72) Inventor: KARAMPATSIS, Dimitrios, Ruislip HA4 6ED (GB); PATEROMICHELAKIS, Emmanouil, 41751 Viersen (DE)
(74) Representative: Openshaw & Co.

(56) References cited:
- WO-A1-2021/172810
- US-A1- 2016 205 219
- US-A1- 2021 105 665
- "3rd Generation Partnership Project; Technical Specification Group Services and System Aspects; Architecture enhancements for 5G System (5GS) to support network data analytics services (Release 16)", 3GPP STANDARD; TECHNICAL SPECIFICATION; 3GPP TS 23.288, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.5.0, 3 June 2019 (2019-06-03), pages 1 - 52, XP051753922

## Description

### FIELD

The subject matter disclosed herein relates generally to wireless communications and more particularly relates to deriving analytics for User Equipment ("UE") mobility events.

### BACKGROUND

The Network Data Analytics Function ("NWDAF") derives analytics by collecting data/events from one or more Network Functions ensuring the data are from the target area requested or involve the target UE(s). However, as of Third Generation Partnership Project ("3GPP") Release 17, it is not possible for the NWDAF to retrieve location data using enhanced Location Services ("eLCS") services.

3rd Generation Partnership Project; Technical Specification Group Services and System Aspects; Architecture enhancements for 5G System (5GS) to support network data analytics services (Release 16), 3GPP TS 23.288 V0.5.0 (2019-05), defines the Stage 2 architecture enhancements for 5G System (5GS) to support network data analytics services in 5G Core network.

US20160205219A1 discloses a method, a client terminal and a server of collecting and processing information are disclosed. The client terminal receives a collection strategy from the server, collects position information according to the received collection strategy, and sends the collected position information to the server. After receiving and storing the collected position information, the server performs an analysis of the collected position information according to a preset rule to form configuration data of the collection strategy, updates the collection strategy according to the configuration data formed by the analysis, and sends the updated collection strategy to the client terminal. The client terminal receives the updated collection strategy sent by the server, and collects the position information according to the updated strategy.

### BRIEF SUMMARY

The invention is defined by the appended independent claims.

Disclosed are procedures for deriving analytics for UE mobility events, e.g., based on a request containing a set of requirements. Said procedures may be implemented by apparatus, systems, methods, or computer program products.

One method of an analytics unit for deriving analytics for UE mobility events includes receiving a first request for analytics, where the first request indicates a set of requirements for User Equipment ("UE") mobility including a minimum distance and a specific time period requirement. The method includes identifying a set of UEs for which to retrieve location data for mobility events based on the set of requirements and retrieving location data for the identified set of UEs for mobility events that satisfy the minimum distance and the specific time period. The method includes deriving analytics output based on the first request.

### BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:
Figure 1A is a diagram illustrating one embodiment of a wireless communication system for deriving analytics for UE mobility events;
Figure 1B is a diagram illustrating one embodiment of an architecture for location services in the 3GPP Fifth Generation System ("5GS");
Figure 2 is a diagram illustrating one embodiment of a NWDAF architecture that derives analytics based on information collected by other Network Functions ("NFs");
Figure 3 is a diagram illustrating one embodiment of a procedure for deriving analytics for a motion of a UE;
Figure 4 is a diagram illustrating one embodiment of a procedure for deriving analytics for UEs that are mobile/ in motion;
Figure 5 is a diagram illustrating one embodiment of a procedure for deriving analytics for a target zone within a target area;
Figure 6 is a block diagram illustrating one embodiment of a user equipment apparatus that may be used for deriving analytics for UE mobility events;
Figure 7 is a block diagram illustrating one embodiment of a network apparatus that may be used for deriving analytics for UE mobility events; and
Figure 8 is a flowchart diagram illustrating one embodiment of a first method for deriving analytics for UE mobility events.

### DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects.

For example, the disclosed embodiments may be implemented as a hardware circuit comprising custom very-large-scale integration ("VLSI") circuits or gate arrays, off-the-shelf semiconductors such as logic chips, transistors, or other discrete components. The disclosed embodiments may also be implemented in programmable hardware devices such as field programmable gate arrays, programmable array logic, programmable logic devices, or the like. As another example, the disclosed embodiments may include one or more physical or logical blocks of executable code which may, for instance, be organized as an object, procedure, or function.

Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random-access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain or store a program for use by or in connection with an instruction execution system, apparatus, or device.

Code for carrying out operations for embodiments may be any number of lines and may be written in any combination of one or more programming languages including an object-oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN"), wireless LAN ("WLAN"), or a wide area network ("WAN"), or the connection may be made to an external computer (for example, through the Internet using an Internet Service Provider ("ISP")).

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one and only one of any single item in the list. For example, "one of A, B and C" includes only A, only B or only C and excludes combinations of A, B and C. As used herein, "a member selected from the group consisting of A, B, and C," includes one and only one of A, B, or C, and excludes combinations of A, B, and C." As used herein, "a member selected from the group consisting of A, B, and C and combinations thereof" includes only A, only B, only C, a combination of A and B, a combination of B and C, a combination of A and C or a combination of A, B and C.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart diagrams and/or block diagrams.

The code may also be stored in a storage device that can direct a computer, other programmable data processing apparatus, or other devices to function in a particular manner, such that the instructions stored in the storage device produce an article of manufacture including instructions which implement the function/act specified in the flowchart diagrams and/or block diagrams.

The code may also be loaded onto a computer, other programmable data processing apparatus, or other devices to cause a series of operational steps to be performed on the computer, other programmable apparatus or other devices to produce a computer implemented process such that the code which execute on the computer or other programmable apparatus provide processes for implementing the functions/acts specified in the flowchart diagrams and/or block diagrams.

The call-flow diagrams, flowchart diagrams and/or block diagrams in the Figures illustrate the architecture, functionality, and operation of possible implementations of apparatuses, systems, methods, and program products according to various embodiments. In this regard, each block in the flowchart diagrams and/or block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the call-flow, flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

Generally, the present disclosure describes systems, methods, and apparatus for deriving analytics for UE mobility events. In certain embodiments, the methods may be performed using computer code embedded on a computer-readable medium. In certain embodiments, an apparatus or system may include a computer-readable medium containing computer-readable code which, when executed by a processor, causes the apparatus or system to perform at least a portion of the below described solutions.

A mobile communication network (e.g., 5G core network) may deploy a Network Data Analytics Function ("NWDAF") that provides analytics info to the core network and other consuming entities. The Analytics that the NWDAF provides are based on training a Machine Learning ("ML") model with data collected from the relevant Data Producers which may be on ore more Network Functions ("NFs"), Operation and Management ("OAM") functions, Application Functions ("AFs"), or UEs. For each analytics output, identified by an Analytic ID there is a specific ML model used. The NWDAF uses the trained model to provide statistics or prediction to an NF's request. The requesting function is referred to as "Consumer" or "Analytics Consumer." For example, a consumer may be an NF, AF or OAM may request analytics information and provide an Analytic ID and parameters with the request. A Consumer may ask for analytics either in the form of statistics or predictions.

The NWDAF derives the analytics by collecting relevant data from Data Producers. Candidate Data Producers include application functions, network exposure functions, control plane NFs, user plane functions, Operations and Maintenance ("OAM") functions, and the like. For example, the NWDAF derives statistics or predictions for User Equipment ("UE") location by collecting location changes events from the Access and Mobility Management Function ("AMF"). The NWDAF retrieves the related data from the NFs by using the Event Exposure Subscribe/Notify service operation. The NWDAF subscribes from the NF to retrieve specific data by including an Event ID (e.g., Location Changes). The NF/AFs then Notifies the NWDAF when the "Event" takes place. For example, an AMF NF notifies the NWDAF that the UE location changed. The NWDAF uses various data processing techniques to derive analytics information from the collected data and reports the analytics to the requesting NF.

Currently when a consumer requests analytics from an NWDAF the consumer may include in the request a target area and/or a target UE or group of UE(s). The NWDAF derives analytics output/data by collecting data/events from one or more Network Functions ensuring the data are from the target area requested or involve the target UE(s). These analytics are derived taking into account a static location of UEs based on AMF determining a UE entering or leaving a specific area of interest with a granularity of Tracking Area(s) or Cell ID(s).

As part of the support of Location Services in the Fifth Generation System ("5GS"), a consumer may request a more dynamic location for a UE. A consumer may be an application client an application function or a network function in 5G core network. The following types of location information can be requested by a consumer:
a) UE availability: Any event in which the 5G core network ("5GC") has established a contact with the UE. This event is considered to be applicable when the UE is temporarily unavailable due to inaction by the user, or for temporarily loss of radio connectivity or International Mobile Subscriber Identity ("IMSI") detach and so on
b) Area: An event where the UE enters, leaves or remains within a pre-defined geographical area.
c) Periodic Location: An event where a defined periodic timer expires in the UE and activates a location report.
d) Motion: An event where the UE moves by more than some predefined straight line distance from a previous location. The motion event may be reported one time only, or multiple times.

Analytics involving motion of a UE have not been explored in 3GPP. The NWDAF can leverage the motion of the UE to determine one or more of the following:
- Identify more accurate mobility analytics where the analytics can include the direction of the UE or presence area reporting at a specific zone within a target area.
- Identifying problem areas where a specific motion of a UE or group of UE(s) result in deteriorating performance. For example, a user travelling from home to the office.
- Deriving analytics specifying a target area/group of UEs with higher granularity. One use case is the case of creating vulnerable road user zones where in such zone a Vehicle-to-everything ("V2X") AF may require a specific service experience or network performance. Location data involving the motion of a UE can be used to accurately define a specific zone and derive corresponding analytics.

The solutions described herein define mechanisms for a consumer to request analytics involving mobility/motion of a UE and for the NWDAF to collect location data using the enhanced Location Services ("eLCS") service by requesting the UE to provide location data when the UE is mobile.

In a first solution the NWDAF identifies motion and/or mobility analytics for a UE or group of UEs. This solution provides the mechanism for a consumer to request analytics (statistics/predictions) where UEs are in motion.

In a second solution the NWDAF derives analytics for UEs in motions/mobile UEs. In this solution, the consumer requests to receive analytics only for UEs that are in motion. Such analytics can assist the consumer to determine location/areas where the service experience of a UE or network performance deteriorates when the UEs are mobile/in motion.

In a third solution the NWDAF derives analytics within a zone. This solution is particularly applicable to zoning in European Telecommunications Standards Institute ("ETSI") Multi-access Edge Computing ("MEC"). In one scenario, a MEC platform service receives a requirement to form a zone and provisioning parameters from a MEC Application. Such function can be a consumer to request analytics from an NWDAF for a specific zone within a target area. The NWDAF determines the UEs in the target zone within a target area by leveraging the location data from LCS service.

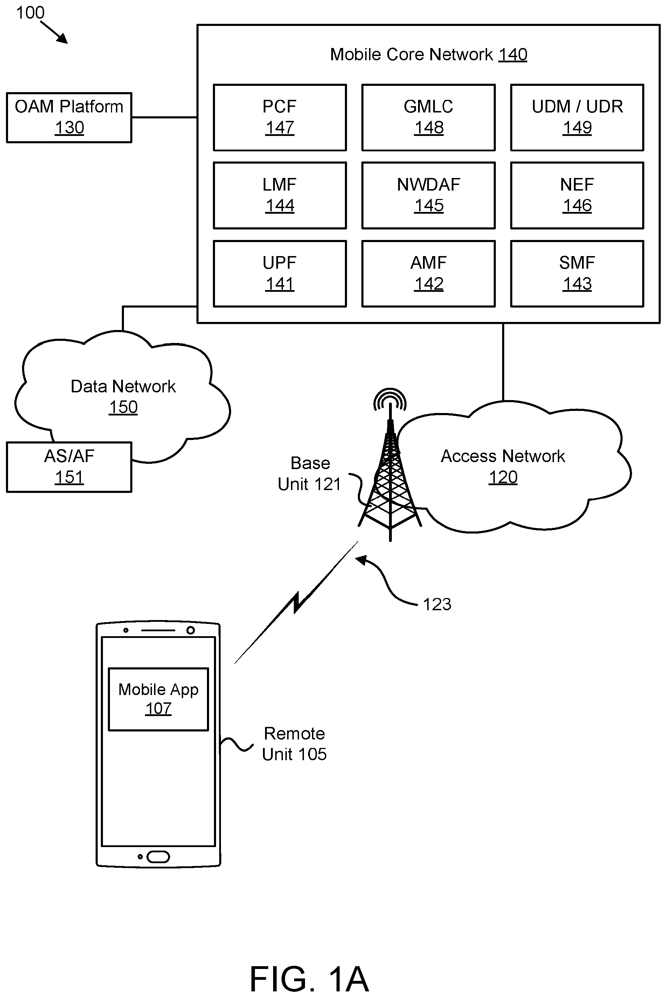

Figure 1A depicts a wireless communication system 100 for deriving analytics for UE mobility events, according to embodiments of the disclosure. In one embodiment, the wireless communication system 100 includes at least one remote unit 105, at least one base unit 121, at least one access network ("AN") 120, and a mobile core network 140. The AN 120 may be composed of at least one base unit 121. The remote unit 105 may communicate with the access network 120 using 3GPP communication links and/or non-3GPP communication links, according to an access technology (e.g., Radio Access Technology ("RAT")) used by the AN 120. Even though a specific number of remote units 105, base units 121, ANs 120, and mobile core networks 140 are depicted in Figure 1A, one of skill in the art will recognize that any number of remote units 105, base units 121, ANs 120, and mobile core networks 140 may be included in the wireless communication system 100.

In one implementation, the wireless communication system 100 is compliant with the Fifth-Generation ("5G") system specified in the Third Generation Partnership Project ("3GPP") specifications. For example, the AN 120 may comprise a New Generation Radio Access Network ("NG-RAN"), implementing New Radio ("NR") Radio Access Technology ("RAT") and/or Long-Term Evolution ("LTE") RAT. In another example, the AN 120 may comprise a non-3GPP RAT (e.g., Wi-Fi^{®} or Institute of Electrical and Electronics Engineers ("IEEE") 802.11-family compliant WLAN). In another implementation, the AN 120 is compliant with the LTE system specified in the 3GPP specifications. More generally, however, the wireless communication system 100 may implement some other open or proprietary communication network, for example Worldwide Interoperability for Microwave Access ("WiMAX") or IEEE 802.16-family standards, among other networks. The present disclosure is not intended to be limited to the implementation of any particular wireless communication system architecture or protocol.

In one embodiment, the remote units 105 may include computing devices, such as desktop computers, laptop computers, personal digital assistants ("PDAs"), tablet computers, smart phones, smart televisions (e.g., televisions connected to the Internet), smart appliances (e.g., appliances connected to the Internet), set-top boxes, game consoles, security systems (including security cameras), vehicle on-board computers, network devices (e.g., routers, switches, modems), or the like. In some embodiments, the remote units 105 include wearable devices, such as smart watches, fitness bands, optical head-mounted displays, or the like. Moreover, the remote units 105 may be referred to as the UEs, subscriber units, mobiles, mobile stations, users, terminals, mobile terminals, fixed terminals, subscriber stations, user terminals, wireless transmit/receive unit ("WTRU"), a device, or by other terminology used in the art. In various embodiments, the remote unit 105 includes a subscriber identity and/or identification module ("SIM") and the mobile equipment ("ME") providing mobile termination functions (e.g., radio transmission, handover, speech encoding and decoding, error detection and correction, signaling and access to the SIM). In certain embodiments, the remote unit 105 may include a terminal equipment ("TE") and/or be embedded in an appliance or device (e.g., a computing device, as described above).

The remote units 105 may communicate directly with one or more of the base units 121 in the access network 120 via uplink ("UL") and downlink ("DL") communication signals. Furthermore, the UL and DL communication signals may be carried over the communication links 123. Note, that the access network 120 is an intermediate network that provide the remote units 105 with access to the mobile core network 140.

In some embodiments, the remote units 105 communicate with an application server and/or application function ("AS/AF") 151 (or other communication peer) via a network connection with the mobile core network 140. For example, an application 107 in a remote unit 105 (e.g., web browser, media client, telephone/VoIP application) may trigger the remote unit 105 to establish a Protocol Data Unit ("PDU") session (or other data connection) with the mobile core network 140 using the access network 120. The mobile core network 140 then relays traffic between the remote unit 105 and the communication host (i.e., application server) using the PDU session. The PDU session represents a logical connection between the remote unit 105 and the User Plane Function ("UPF") 141.

In order to establish the PDU session (or PDN connection), the remote unit 105 must be registered with the mobile core network 140 (also referred to as "attached to the mobile core network" in the context of a Fourth Generation ("4G") system). Note that the remote unit 105 may establish one or more PDU sessions (or other data connections) with the mobile core network 140. As such, the remote unit 105 may have at least one PDU session for communicating with the packet data network 150. The remote unit 105 may establish additional PDU sessions for communicating with other data networks and/or other communication peers.

In the context of a 5G system ("5GS"), the term "PDU Session" refers to a data connection that provides end-to-end ("E2E") user plane ("UP") connectivity between the remote unit 105 and a specific Data Network ("DN") through the UPF 141. A PDU Session supports one or more Quality of Service ("QoS") Flows. In certain embodiments, there may be a one-to-one mapping between a QoS Flow and a QoS profile, such that all packets belonging to a specific QoS Flow have the same 5G QoS Identifier ("5QI").

In the context of a 4G/LTE system, such as the Evolved Packet System ("EPS"), a Packet Data Network ("PDN") connection (also referred to as EPS session) provides E2E UP connectivity between the remote unit and a PDN. The PDN connectivity procedure establishes an EPS Bearer, i.e., a tunnel between the remote unit 105 and a Packet Gateway ("PGW", not shown) in the mobile core network 140. In certain embodiments, there is a one-to-one mapping between an EPS Bearer and a QoS profile, such that all packets belonging to a specific EPS Bearer have the same QoS Class Identifier ("QCI").

The base units 121 may be distributed over a geographic region. In certain embodiments, a base unit 121 may also be referred to as an access terminal, an access point, a base, a base station, a Node-B ("NB"), an Evolved Node B (abbreviated as eNodeB or "eNB," also known as Evolved Universal Terrestrial Radio Access Network ("E-UTRAN") Node B), a 5G/NR Node B ("gNB"), a Home Node-B, a relay node, a RAN node, or by any other terminology used in the art. The base units 121 are generally part of an access network ("AN"), such as the AN 120, that may include one or more controllers communicably coupled to one or more corresponding base units 121. These and other elements of radio access network are not illustrated but are well known generally by those having ordinary skill in the art. The base units 121 connect to the mobile core network 140 via the AN 120.

The base units 121 may serve a number of remote units 105 within a serving area, for example, a cell or a cell sector, via a communication link 123. The base units 121 may communicate directly with one or more of the remote units 105 via communication signals. Generally, the base units 121 transmit DL communication signals to serve the remote units 105 in the time, frequency, and/or spatial domain. Furthermore, the DL communication signals may be carried over the communication links 123. The communication links 123 may be any suitable carrier in licensed or unlicensed radio spectrum. The communication links 123 facilitate communication between one or more of the remote units 105 and/or one or more of the base units 121. Note that during NR operation on unlicensed spectrum (referred to as "NR-U"), the base unit 121 and the remote unit 105 communicate over unlicensed (i.e., shared) radio spectrum.

In one embodiment, the mobile core network 140 is a 5G core ("5GC") or an Evolved Packet Core ("EPC"), which may be coupled to a packet data network 150, like the Internet and private data networks, among other data networks. A remote unit 105 may have a subscription or other account with the mobile core network 140. Each mobile core network 140 belongs to a single mobile network operator ("MNO") or public land mobile network ("PLMN"). The present disclosure is not intended to be limited to the implementation of any particular wireless communication system architecture or protocol.

The mobile core network 140 includes several network functions ("NFs"). As depicted, the mobile core network 140 includes at least one user plane function ("UPF") 141 that serves the access network 120. The mobile core network 140 also includes multiple control plane functions including, but not limited to, an Access and Mobility Management Function ("AMF") 142, a Session Management Function ("SMF") 143, a Location Management Function ("LMF") 144, a NWDAF 145, a Network Exposure Function ("NEF") 146, a Policy Control Function ("PCF") 147, a Gateway Mobile Location Center ("GMLC") 148, and a Unified Data Management function ("UDM"). Although specific numbers and types of network functions are depicted in Figure 1A, one of skill in the art will recognize that any number and type of network functions may be included in the mobile core network 140.

Currently, when an AF is an external entity to a PLMN the interaction between the AF and the network is via a Network Exposure Function ("NEF") 146. The NEF 146 supports external exposure of capabilities of network functions including for monitoring occurrences of events. As described above, the NWDAF 145 provides analytics information to the core network functions and other consuming entities. As of 3GPP Release 17, an NWDAF 145 cannot provide analytics that take into account the actual motion of a UE/remote unit 105 (i.e., provide analytics only for the case where a UE is mobile). However, the solution described below allow the NWDAF 145 to leverage the motion of the UE to derive improved analytics involving motion of a remote unit 105.

The UPF(s) 141 is/are responsible for packet routing and forwarding, packet inspection, QoS handling, and external PDU session for interconnecting Data Network ("DN"), in the 5G architecture. The AMF 142 is responsible for termination of Non-Access Stratum ("NAS") signaling, NAS ciphering & integrity protection, registration management, connection management, mobility management, access authentication and authorization, security context management. The SMF 143 is responsible for session management (i.e., session establishment, modification, release), remote unit (i.e., UE) Internet Protocol ("IP") address allocation & management, DL data notification, and traffic steering configuration of the UPF 141 for proper traffic routing.

The PCF 147 is responsible for unified policy framework, providing policy rules to Control Plane ("CP") functions, access subscription information for policy decisions in the Unified Data Repository ("UDR," also referred to as User Data Repository). The UDM is responsible for generation of Authentication and Key Agreement ("AKA") credentials, user identification handling, access authorization, subscription management. The UDR is a repository of subscriber information and may be used to service a number of network functions. For example, the UDR may store subscription data, policy-related data, subscriber-related data that is permitted to be exposed to third party applications, and the like. In some embodiments, the UDM is co-located with the UDR, depicted as combined entity "UDM/UDR" 149.

The GMLC 148 contains functionality required to support location-based service ("LBS"). In certain embodiments, the GMLC 148 is the first node an external LBS client accesses in a mobile communication network (e.g., UMTS, EPS, 5GS). In various embodiments, the remote unit 105 may receive a measurement configuration from the LMF 144 via AN 120. The remote unit 105 performs positioning measurement and sends a positioning report to the LMF 144. The LMF 144 (a location server) receives measurements from the AN 120 and the remote unit 105 (e.g., via the AMF 142) and computes the position of the remote unit 105.

In various embodiments, the mobile core network 140 may also include an Authentication Server Function ("AUSF") for performing 5G authentication procedures, a Network Repository Function ("NRF") (which provides Network Function ("NF") service registration and discovery, enabling NFs to identify appropriate services in one another and communicate with each other over Application Programming Interfaces ("APIs")), a Network Slice Selection Function ("NSSF") for maintaining a list of operator-defined network slice instances and redirecting traffic to an intended network slice, or other NFs defined for the 5GC.

In various embodiments, the mobile core network 140 supports different types of mobile data connections and different types of network slices, wherein each mobile data connection utilizes a specific network slice. Here, a "network slice" refers to a portion of the mobile core network 140 optimized for a certain traffic type or communication service. For example, one or more network slices may be optimized for enhanced mobile broadband ("eMBB") service. As another example, one or more network slices may be optimized for ultra-reliable low-latency communication ("URLLC") service. In other examples, a network slice may be optimized for machine-type communication ("MTC") service, massive MTC ("mMTC") service, Internet-of-Things ("IoT") service. In yet other examples, a network slice may be deployed for a specific application service, a vertical service, a specific use case, etc.

A network slice instance may be identified by a single-network slice selection assistance information ("S-NSSAI") while a set of network slices for which the remote unit 105 is authorized to use is identified by network slice selection assistance information ("NSSAI"). Here, "NSSAI" refers to a vector value including one or more S-NSSAI values. In certain embodiments, the various network slices may include separate instances of network functions, such as the SMF 143 and UPF 141. In some embodiments, the different network slices may share some common network functions, such as the AMF 142. The different network slices are not shown in Figure 1A for ease of illustration, but their support is assumed.

The wireless communication system 100 includes an OAM / Management function 130. The OAM / Management function 130 may provide service and/or slice parameters (e.g., service profiles, Key Performance Indicators ("KPIs"), Generic Network Slice Templates ("GST," i.e., a set of attributes that can characterize a type of network slice/service) to an enabler server. In various embodiments, the OAM / Management function 130 performs slice instantiation, e.g., in response to a request from a service provider. As described below, the OAM 130 may provide data to the NWDAF 145 usable for deriving various network analytics data.

While Figure 1A depicts components of a 5G RAN and a 5G core network, the described embodiments for deriving analytics for UE mobility events apply to other types of communication networks and RATs, including IEEE 802.11 variants, Global System for Mobile Communications ("GSM", i.e., a 2G digital cellular network), General Packet Radio Service ("GPRS"), Universal Mobile Telecommunications System ("UMTS"), LTE variants, CDMA 2000, Bluetooth, ZigBee, Sigfox, and the like.

Moreover, in an LTE variant where the mobile core network 140 is an EPC, the depicted network functions may be replaced with appropriate EPC entities, such as a Mobility Management Entity ("MME"), a Serving Gateway ("SGW"), a PGW, a Home Subscriber Server ("HSS"), and the like. For example, the AMF 142 may be mapped to an MME, the SMF 143 may be mapped to a control plane portion of a PGW and/or to an MME, the UPF 141 may be mapped to an SGW and a user plane portion of the PGW, the UDM/UDR 149 may be mapped to an HSS, etc.

In the following descriptions, the term "RAN node" is used for the base station but it is replaceable by any other radio access node, e.g., base station ("BS"), eNB, gNB, Access Point ("AP"), RAN entity, etc. The term "UE" is used for the mobile station/ remote unit, but it is replaceable by any other remote device, e.g., remote unit, Mobile Station ("MS"), ME, etc. Further, the operations are described mainly in the context of 5G NR. However, the below described solutions/methods are also equally applicable to other mobile communication systems for deriving analytics for UE mobility events.

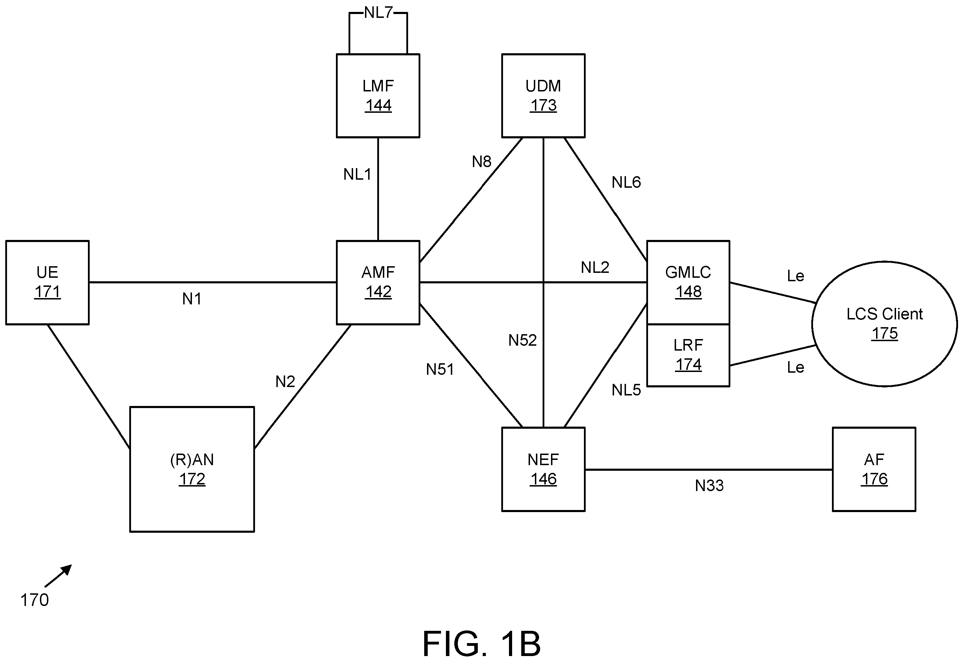

Figure 1B depicts an architecture 170 for location services in 5GS, according to embodiments of the disclosure. The architecture 170 may be one implementation of the wireless communication system 100. The architecture 170 includes a target UE 171 in communication with a (Radio) Access Network 172, e.g., implementations of the remote unit 105 and the access network 120, respectively. The architecture 170 includes a UDM 173 and an AF 176, e.g., implementations of the UDM/UDR 149 and AS/AF 151, respectively. The architecture 170 includes an AMF 142, a LMF 144, an NEF 146, and a GMLC 148. The architecture 170 includes a Location Retrieval Function ("LRF") 174 and a LCS client 175. Note that the LRF may retrieve location information for users that have initiated an emergency session. The architecture 170 also depicts 3GPP system architecture reference points used for interactions between the various network entities (e.g., UE, NF, AF, client, etc.) . These reference points may be realized by corresponding NF service-based interfaces and by specifying the identified consumer and producer NF service as well as their interaction in order to realize a particular system procedure.

A location request is sent from the LCS client 175 and is received by the GMLC 148. The GMLC 148 is responsible to validate the request and forward the request to an AMF 142 serving the UEs whose location is requested. The AMF 142 selects an LMF 144 for collection location events from target UEs, e.g., the target UE 171.

The LMF 144 manages the overall coordination and scheduling of resources required for the location for the UE 171. The LMF 144 receives location requests for a target UE 171 from the serving AMF 142, e.g., using the Nlmf service-based interface. The LMF 144 interacts with the target UE 171 in order to exchange location information applicable to the target UE 171. When the target UE 171 is served by an LTE access (i.e., where (R)AN 172 implements LTE RAT), then the target UE 171 and LMF 144 exchange positioning information via control plane signaling by supporting the LTE Positioning Protocol ("LPP"). When the target UE 171 is served by an NR access (i.e., where (R)AN 172 implements NR RAT), then the target UE 171 and LMF 144 exchange positioning information via control plane signaling by supporting the NR Positioning Protocol A ("NRPPa").

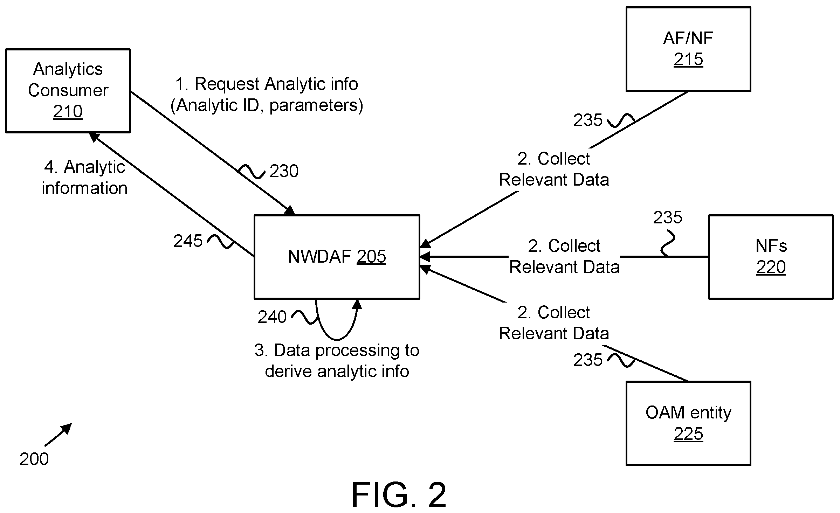

Figure 2 depicts a NWDAF architecture 200 for deriving analytics based on information collected by other NFs, according to embodiments of the disclosure. The NWDAF architecture 200 includes a NWDAF 205 (which may be one embodiment of the NWDAF 145), a Analytics Consumer 210, and one or more data producer entities capable of providing data relating to various Event IDs, depicted as the AF/NF 215, the NFs 220, and the OAM entity 225. The Analytics Consumer 210 may be an NF, an AF, etc.

As depicted in Figure 2, the NWDAF 205 derives analytics based on an NF request, i.e., from the Analytics Consumer 210 (see messaging 230). The NF request can either be a subscription to analytics or a one-time request. In various embodiments, the NF request includes the following: 1) an Analytic ID, identifying the type of analytics requested (e.g., UE mobility analytics); 2) Analytics Filter information, which provides additional information on the analytics information required (e.g., targeting a specific Application or a Specific area of interest); 3) the Target of Analytics Reporting, which identifies whether the information is for a specific UE a group of UEs or any UE; 4) Analytic Reporting Information, which provides information on when and how the NWDAF 205 should report analytics; 5) an Analytics Target Period, which provide information whether statistics or predictions are requested; 6) one or more Reporting Thresholds, which indicate conditions on the level of each requested analytics that when reached will be notified by the NWDAF 205; 7) a preferred level of accuracy of the analytics (e.g., Low/High); and 8) a Time when the information should be provided.

The NWDAF 205 derives the analytics by collecting relevant data from NFs. The NWDAF 205 identifies the NFs 215-220 to collect the data based on the Analytic ID requested by the Analytics Consumer 210. For example, if UE mobility analytics are requested, then the NWDAF 205 derives statistics or predictions for UE location by subscribing from the AMF 142 to retrieve location changes events of a specific UE. The NWDAF 145 retrieves the related data from the NFs by using the Event Exposure Subscribe/Notify service operation (see messaging 235).

The NWDAF 205 performs data processing to derive analytic information (see action 240). The NWDAF 205 also provides analytic information to the Analytics Consumer 210 (see messaging 245).

In some embodiments, an Analytics Consumer 210 when requesting one-time analytics from the NWDAF 205 may provide an indication of the time when analytics information is needed. If the time is reached and the NWDAF 205 does not provide an answer (i.e., a response with Analytics information) the NWDAF 205 may indicate the reason for not providing a response. In addition, when an Analytics Consumer 210 subscribes to receive periodic analytic information, the Analytics Consumer 210 may request a preferred level of analytics of the accuracy.

In various embodiments, the NWDAF 205 may include in the response to the Analytics Consumer 210 the following information: 1) a Timestamp of analytics generation, which allows consumers to decide until when the received information shall be used; 2) a Validity period, which defines the time period for which the analytics information is valid; 3) a Probability assertion, i.e., confidence in the prediction, which may be based on preferred level of accuracy requested by the consumer NF. In some embodiments, a Analytics Consumer 210 may deem a received notification from NWDAF 205 for a given feedback as invalid based on the Timestamp of analytics generation.

A more complete list of potential Analytics Consumer NF for each Analytics output the NWDAF provides is described in the Table 1 below.

**Table 1: Example Analytics Consumer NFs for each Analytic Output the NWDAF provides**

| **NWDAF Analytics Output** | **Analytics Consumer NF** |
|---|---|
| Slice Load Level | PCF, NSSF |
| Observed Service Experience | PCF, OAM |
| NF load analytics | All 5G core NFs, OAM |
| Network Performance Analytics | PCF, NEF, AF, or OAM |
| UE Mobility Analytics | AMF, SMF |
| UE Communication Analytics | AMF, SMF, PCF |
| Expected UE behavioral analytics | AMF, UDM, AF or OAM |
| Abnormal behavior analytics | AMF, SMF, PCF |
| User Data Congestion analytics | NEF, AF |
| QoS Sustainability Analytics | AF |

The trigger for an Analytics Consumer NF (e.g., Analytics Consumer 210) to receive analytics from an NWDAF (e.g., NWDAF 205) may be: A) based on the triggers (e.g., event reports or requests) from the other NF(s); or B) based on a local event, e.g., the detected UE behavior or network performance.

Based on the received analytics output, an Analytics Consumer NF may identify an issue, and, in response, it may take one or more actions to alleviate the issue. Currently analytics relating to UE mobility are provided based on collecting location information on whether a UE is within a specific target area at a particular time period. The data collected do not take into account the UE mobility within the target area. The finer granularity of UE mobility can be per cell ID of the ran node serving a UE. It is not possible to define analytics for UEs that are mobile or in motion for a specific distance at a particular time period. Such analytics would allow to identify UEs whose observed service experience is not optimal when such UE are mobile (e.g. when a user travels from home to the office) and adjust accordingly the network configuration to optimize the service experience of such UEs.

Per 3GPP Release 17, it is not possible for the NWDAF to retrieve location data using eLCS services. In addition, it has not been specified for what use cases the NWDAF will retrieve the location data using eLCS service. The solutions described herein provide mechanisms for a Consumer NF to request analytics involving mobility/motion of a UE and for the NWDAF to collect location data using the eLCS service by requesting the UE to provide location data when the UE is mobile.

According to embodiments of the first solution, a consumer requests the NWDAF to identify analytics for a motion for a UE (or a group of UEs). One use case for such analytics is for an AF to identify the motion/direction of a UE used by emergency services (e.g., an ambulance) or a Vulnerable Road User ("VRU") UE (such as a school bus). Based on the motion analytics the consumer can then identify if the QoS is sustainable through the specific mobility/motion of the UE (based on statistics or predictions).

In an alternative embodiment, a consumer may request UE mobility analytics for UEs entering or leaving a target area with higher granularity than providing a list of geographical areas, TA(s) or cell ID(s). The consumer may request UE mobility analytics only for UEs that are mobile for a specific distance.

In a yet alternative embodiment, a consumer may also request to UE mobility analytics for UEs that were mobile for a minimum distance at a specific time interval. Such UE mobility analytics are useful for the network to determine UEs that are highly mobile.

The analytics request from a consumer NF may re-use the same Analytics ID for UE mobility analytics, including additional analytics filters requesting analytics for a motion of a UE or group of UEs or any UE in a target area. In an alternative embodiment a new analytic IDs may be defined.

As analytics filters within an existing or new analytic ID the following may be included:
- Threshold linear distance (the distance that the UE must make before a location must be provided)
- The duration of the event reporting
- The minimum and maximum time intervals between successive event reports
- The maximum event sampling interval

Once mobility motion analytics are requested, the NWDAF collects mobility analytics data using the eLCS service. The NWDAF requests data either to a Gateway Mobile Location Center ("GMLC") by including a Location Services ("LCS") service request or directly to the AMF (in that case the NWDAF supports GMLC functionality) by invoking the Namf_ProvidePositioning_Info request. In case the NWDAF requests location info directly from the AMF the NWDAF first needs to identify the AMF serving the UE (or group of UEs) from a UDM.

If the consumer requested mobility analytics for UEs in motion for any UE in a target area the NWDAF first determines the UEs present in the target area at the time of day requested by a consumer, by interfacing with the UDM and/or AMF.

The NWDAF determines the UE(s) that reported a change of mobility and derives analytics. When location information is reported the NWDAF marks in the data collected the time/location that the UE was in motion and the distance taken. If a time period is included in the consumer request, the NWDAF ignores the UEs that reported a change of location after the minimum time period.

The analytics reported by the NWDAF additionally include the following information:
- Location statistics
   ∘ Motion of a UE: Start Location, End Location, Average Distance or Distance Taken, Time of motion
- Location predictions
   ∘ Expected/Predicted motion of a UE: Start Location, End Location, Average Distance Taken, Time of motion, Confidence Level

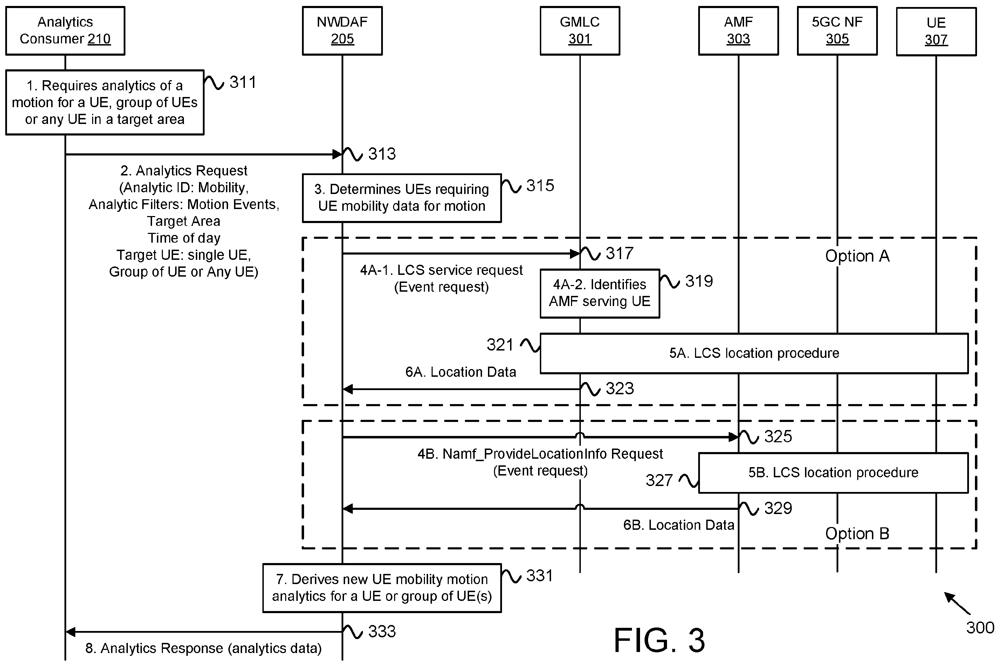

Figure 3 depicts a procedure 300 for deriving analytics for a motion of a UE, according to embodiments of the disclosure. The procedure 300 involves the Analytics Consumer 210, the NWDAF 205, a GMLC 301, an AMF 303, a 5GC NF 305, and a UE 307. The GMLC 301 and the AMF 303 may be implementations of the GMLC 148 and AMF 142, respectively. The UE 307 may be an implementation of the target UE 171 and/or the remote unit 105. The procedure 300 is illustrates an implementation of the first solution.

At Step 1, the Analytics Consumer 210 determines that it requires mobility analytics for a motion of a UE, group of UEs or any UE in a target area (see block 311).

At Step 2, the Analytics Consumer 210 requests UE mobility analytics from the NWDAF 205 (see messaging 313). The request may include a target area where motion of a UE is requested (mandatory to be included if the target is "Any UE"), target UE (e.g., a single UE, a group of UEs or "Any UE" - where no particular UE is specified) and the threshold linear distance before a UE reports a location, duration of the event reporting, the minimum and maximum time intervals between successive event reports, the maximum event sampling interval. If analytics are requested for "Any UE", then the Analytics Consumer 210 is to include the target area.

At Step 3, the NWDAF 205 determines the UEs to collect UE motion and/or mobility data and identifies that the eLCS services need to be invoked (see block 315). The NWDAF 205 collects data by either requesting location from a GMLC server 301 (steps 4A-6A) or request location of a UE by directly interfacing with an AMF 303 (steps 4B-6B). If location data for a Group of UEs is requested the NWDAF 205 sends individual location request for each UE.

If at Step 2 an area of interest is specified for any UE, the NWDAF 205 determines the AMF(s) 303 serving the area and determine the UEs served by the AMF(s) 303. The NWDAF 205 then includes in the request the target UE(s) identified.

At Steps 4-6, Location Data are collected as specified according to either Option A (using the GMLC 301) or Option B (without using GMLC 301).

According to Option A, at Step 4A-1 the NWDAF 205 sends a service request (e.g., LCS service request) to the GMLC 301 (see messaging 317). Here, the LCS service request includes an event request parameter. In certain embodiments, the LCS service request is as defined in 3GPP Technical Specification ("TS") 23.273.

At Step 4A-2, the GMLC 301 identifies one or more AMFs 303 serving the UEs (i.e., identified by the NWDAF 205 in Step 3) (see block 319).

At Step 5A, the GMLC 301, AMF 303 and 5GC NF 305 perform LCS location procedure with the UE 307, e.g., as defined in 3GPP TS 23.273 (see block 321).

At Step 6A, the GMLC 301 reports Location Data to the NWDAF 205 (see messaging 323).

According to Option B, at Step 4B the NWDAF 205 invokes an AMF location service, e.g., by sending a Namf_ ProvideLocationInfo request to the AMF(s) 303 serving the UEs (see messaging 325) Again, the service request includes the event request parameter. Here, is it assumed that the NWDAF has already identified the AMF(s) 303 serving the UEs identified by the NWDAF 205 in Step 3.

At Step 5B, the AMF 303 and 5GC NF 305 perform LCS location procedure with the UE 307, e.g., as defined in 3GPP TS 23.273 (see block 327).

At Step 6B, the AMF 303 reports Location Data to the NWDAF 205 (see messaging 329).

At Step 7, the NWDAF 205 derives new analytics for motion of a UE or group of UEs (see block 331).

At Step 8, the NWDAF 205 reports the Analytics output (i.e., Analytics data) to the Analytics Consumer 210 (see messaging 333).

According to embodiments of the second solution, a consumer NF may request analytics to identify the performance of a UE (e.g., service experience) or network (e.g., network performance) based on the mobility of a UE when a UE is mobile and travels at a minimum distance, optionally, within a specific time period (either predicted or based on statistics).

Such information can assist the network in identifying problem areas (zones) where the service experience of a UE degrades when the UE is mobile. This is beneficial when a UE is used by emergency services (fast moving vehicles) or a VRU UE (school bus) or a dense urban area with many UEs in motion (e.g., a high street).

The following analytics can be requested (described in 3GPP TS 23.288) taking into account the motion of a UE (note that the below list is not exclusive and other analytics can be used):
- Network Performance Analytics
- User Data Congestion Analytics
- QoS sustainability analytics
- Dispersion analytics
- WLAN performance analytics
- DN performance analytics

The consumer NF includes in the request, as analytics filters, a target area and a threshold linear distance that the UE must make before the UE provides a location and optionally a time period. The consumer NF may also include in the request a target UE or a group of UE(s) or any UE (if any UE is requested the target area must be included).

The NWDAF determines that mobility information must be collected using eLCS services. The NWDAF requests location information using the eLCS service as described in Figure 3 including in the request a target area and the threshold linear distance requested by the consumer.

The NWDAF determines the UE(s) that reported a change of mobility. When location information is reported the NWDAF marks in the data collected the time/location that the UE was in motion and the distance taken. If a time period is included in the consumer request, the NWDAF ignores the UEs that reported a change of location after the minimum time period.

The NWDAF also requests the additional data required for each Analytics ID (e.g., as specified in 3GPP TS 23.288) for the determined UE(s) and derives statistics/predictions during the UE mobility event. The Analytics output (data) reported by the NWDAF include location statistics or predictions as described above with reference to the first solution.

A consumer of such analytics may be a zone configuration function (a new NF or an AF) that dynamically creates zones in areas where - based on statistics or predictions - it is determined that the performance of the service is below a certain threshold.

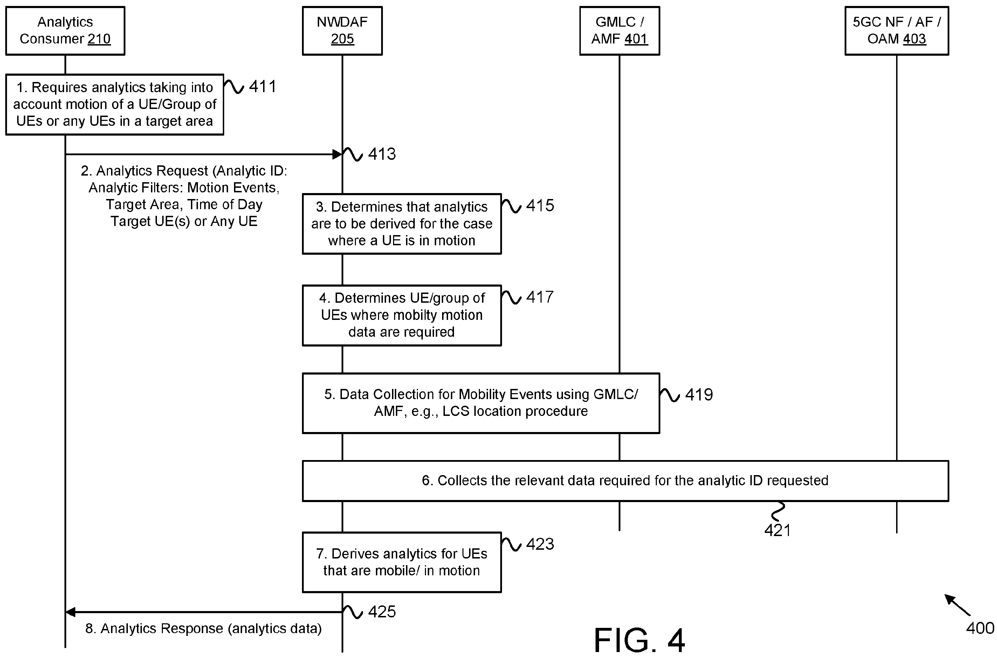

Figure 4 depicts a procedure 400 for deriving analytics for UEs that are mobile/ in motion, according to embodiments of the disclosure. The procedure 400 involves the Analytics Consumer 210, the NWDAF 205, a GMLC and/or AMF (depicted as combined element "GMLC/AMF" 401), and a 5GC NF, or AF, and/or OAM function (depicted as combined element "5GC NF/ AF/ OAM" 403).

At Step 1, the Analytics Consumer 210 determines that it requires analytics taking into account mobility/motion of a UE or group of UEs or UEs in a target area (see block 411).

At Step 2, the Analytics Consumer 210 sends a request for analytic to the NWDAF 205 (see messaging 413). Here, the request includes the Analytic ID and - as analytic filters - motion events. According to the second solution, the motion events include a Target Area and a Threshold Linear Distance that the UE must make before the UE provides a location. The Analytics Consumer 210 may also include in the request a target UE or a group of UE(s) or any UE (if any UE is requested the target area must be included).

At Step 3, the NWDAF 205 determines that analytics are provided only for UEs that are mobile/in motion (see block 415).

At Step 4, the NWDAF 205 determines the UE for which UE motion and/or mobility location data is required (as specified in step 3 of Figure 2.1) using the eLCS service (see block 417).

At Step 5, the NWDAF 205 requests and collects data from the GMLC/AMF 401, e.g., using the LCS location procedure specified in 3GPP TS 23.273 (see block 419).

At Step 6, the NWDAF 205 collects the relevant data from 5GC NF / AF / OAM 403 to derive the analytics requested in Step 2 (see block 421).

At Step 7, the NWDAF 205 derives new analytics taking into account only the UE or group of UEs that are mobile/ in motion (see block 423). Here, the Threshold Linear Distance is used to define which UE is considered to be mobile/ in motion during the relevant time frame.

At Step 8, the NWDAF 205 reports Analytics output (i.e., Analytics data) to the Analytics Consumer 210 (see messaging 425).

In a third embodiment a consumer NF may request analytics within a specific zone of a target area. The consumer NF includes a target area and also defines the target zone, e.g., by indicating a maximum radius of the zone. A zone may be defined as a radius distance (in meters or kilometers). The request may also include a time of day and target UE or group of UEs or any UE.

The NWDAF needs to determine an accurate number of UEs within the zone. First the NWDAF determines a first list with a number of UEs served in the target area. This is supported as follows:
- If the target of analytics is any UE the NWDAF first determines the AMFs serving the target area and determines the UEs served by the identified AMF (in the time of day requested).
- If target UEs are included in the analytics request the NWDAF identifies the AMF serving the target UEs.

The NWDAF then determines a second list of UEs from the first list of UEs that are served in the radius of the zone requested. The NWDAF request location information using the LCS service as described above with reference to the first solution. The NWDAF includes in the request:
- A threshold linear distance that the UE must make before the UE provides a location. The threshold linear distance may be the radius of the zone requested by the consumer NF.
- A periodic location time so that the UE provides frequent location information.

Based on the motion of the UE the NWDAF can accurately determine the number of UEs served in a specific zone and the cells/AMF serving the UEs in that particular zone. The NWDAF can then derive analytics (e.g., one or more analytics data from the list of analytics described in the second solution) providing statistic or predictions for performance of the UEs in the target zone or for the cells, NFs serving the UEs in the target zone. Such analytic information can be used by the consumer to identify if a VRU zone is able to satisfy the traffic requirements of the VRU service.

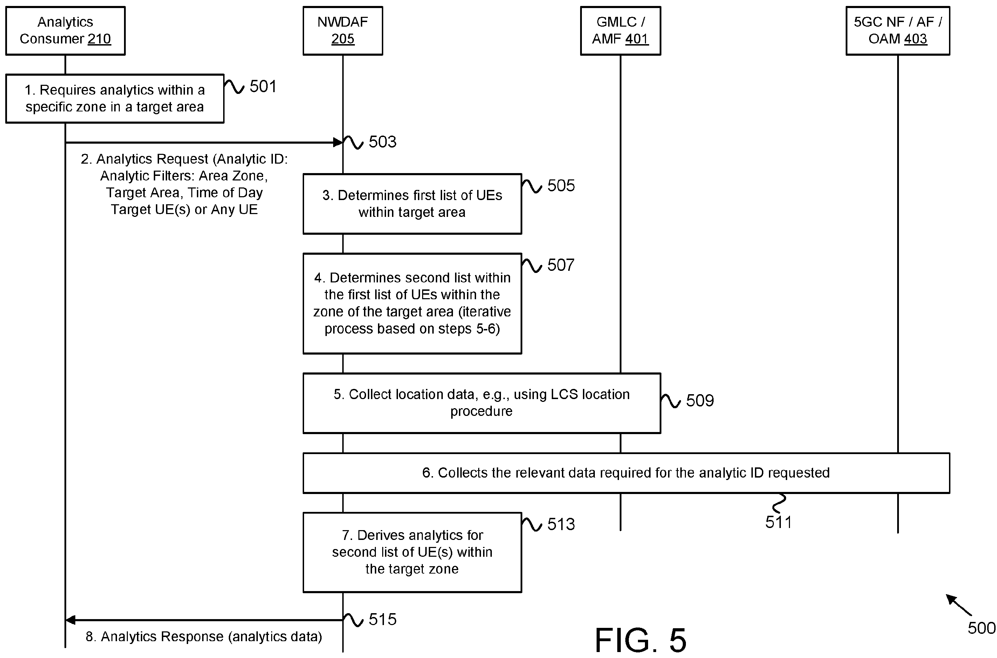

Figure 5 depicts a procedure 500 for deriving analytics for a specific zone within a target area, according to embodiments of the disclosure. The procedure 500 involves the Analytics Consumer 210, the NWDAF 205, the GMLC/AMF 401, and the 5GC NF/ AF/ OAM 403.

At Step 1, the Analytics Consumer 210 determines that it requires analytics within a specific zone of a target area (see block 501). In some embodiments, the Analytics Consumer 210 identifies a target area and also defines a target zone, e.g., a maximum radius of the zone.

At Step 2, the Analytics Consumer 210 sends a request for analytic to the NWDAF 205 (see messaging 503). Here, the request includes the Analytic ID and - as analytic filters -Area zone within a target area. For example, the area zone could target a specific zone within an area served by a cell. The request may also include a target UE or group of UEs and time of day.

At Step 3, the NWDAF 205 determines a first list of UEs served in the target area (see block 505).

At Step 4, the NWDAF 205 determines a second list of UEs (of the first list) that are served in the target zone (see block 507). The NWDAF 205 determines the UE by requesting motion and/or mobility location data using the LCS service, e.g., as shown in Steps 5-7. In the request the NWDAF includes motion events for threshold linear distance which is equivalent to the target zone requested by the analytics consumer.

At Step 5, the NWDAF 205 requests and collects location data from the GMLC/AMF 401 (see block 509). As described above, the NWDAF 205 collects data by either requesting location from a GMLC server or requesting location of a UE by directly interfacing with an AMF. If location data for a Group of UEs is requested the NWDAF sends individual location request for each UE.

In the request for locations data, the NWDAF 205 includes a linear threshold for the UE to provide location, the target radius of the zone. In one embodiment, when the cumulative movement of a UE exceeds the linear threshold (i.e., threshold linear distance), this triggers the UE to report its location. As noted above, the location data collection may use the LCS location procedure, as specified in 3GPP TS 23.273

At Step 6, the NWDAF 205 collects the relevant data from 5GC NF / AF / OAM 403 to derive the analytics requested in Step 2 (see block 511).

At Step 7, the NWDAF 205 derives new analytics taking into account only second list of UE(s) (see block 513).

At Step 8, the NWDAF 205 reports the Analytics output (i.e., Analytics data) to the Analytics Consumer 210 (see messaging 515).

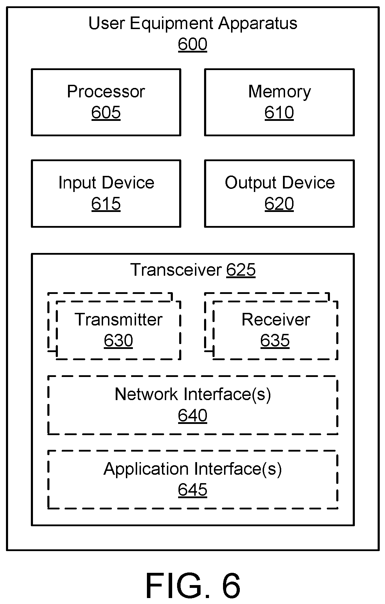

Figure 6 depicts a user equipment apparatus 600 that may be used for deriving analytics for UE mobility events, according to embodiments of the disclosure. In various embodiments, the user equipment apparatus 600 is used to implement one or more of the solutions described above. Furthermore, the user equipment apparatus 600 may include a processor 605, a memory 610, an input device 615, an output device 620, and a transceiver 625.

In some embodiments, the input device 615 and the output device 620 are combined into a single device, such as a touchscreen. In certain embodiments, the user equipment apparatus 600 may not include any input device 615 and/or output device 620. In various embodiments, the user equipment apparatus 600 may include one or more of: the processor 605, the memory 610, and the transceiver 625, and may not include the input device 615 and/or the output device 620.

As depicted, the transceiver 625 includes at least one transmitter 630 and at least one receiver 635. In some embodiments, the transceiver 625 communicates with one or more cells (or wireless coverage areas) supported by one or more base units 121. In various embodiments, the transceiver 625 is operable on unlicensed spectrum. Moreover, the transceiver 625 may include multiple UE panels supporting one or more beams. Additionally, the transceiver 625 may support at least one network interface 640 and/or application interface 645. The application interface(s) 645 may support one or more APIs. The network interface(s) 640 may support 3GPP reference points, such as Uu, N1, PC5, etc. Other network interfaces 640 may be supported, as understood by one of ordinary skill in the art.

The processor 605, in one embodiment, may include any known controller capable of executing computer-readable instructions and/or capable of performing logical operations. For example, the processor 605 may be a microcontroller, a microprocessor, a central processing unit ("CPU"), a graphics processing unit ("GPU"), an auxiliary processing unit, a field programmable gate array ("FPGA"), or similar programmable controller. In some embodiments, the processor 605 executes instructions stored in the memory 610 to perform the methods and routines described herein. The processor 605 is communicatively coupled to the memory 610, the input device 615, the output device 620, and the transceiver 625.

In various embodiments, the processor 605 controls the user equipment apparatus 600 to implement the above described UE behaviors. In certain embodiments, the processor 605 may include an application processor (also known as "main processor") which manages application-domain and operating system ("OS") functions and a baseband processor (also known as "baseband radio processor") which manages radio functions.

Further, the user equipment apparatus 600 supports the LTE Positioning Protocol and NR Position Protocols that are used by LCS services. As described above, the transceiver 625 may receive a request message from an LMF (via AMF), whereupon the processor 605 gathers and exchanges positioning information with the LMF via control-plane signaling to support the LCS services.

The memory 610, in one embodiment, is a computer readable storage medium. In some embodiments, the memory 610 includes volatile computer storage media. For example, the memory 610 may include a RAM, including dynamic RAM ("DRAM"), synchronous dynamic RAM ("SDRAM"), and/or static RAM ("SRAM"). In some embodiments, the memory 610 includes non-volatile computer storage media. For example, the memory 610 may include a hard disk drive, a flash memory, or any other suitable non-volatile computer storage device. In some embodiments, the memory 610 includes both volatile and non-volatile computer storage media.

In some embodiments, the memory 610 stores data related to mobile operation and/or deriving analytics for UE mobility events. For example, the memory 610 may store various parameters, panel/beam configurations, resource assignments, policies, and the like as described above. In certain embodiments, the memory 610 also stores program code and related data, such as an operating system or other controller algorithms operating on the apparatus 600.

The input device 615, in one embodiment, may include any known computer input device including a touch panel, a button, a keyboard, a stylus, a microphone, or the like. In some embodiments, the input device 615 may be integrated with the output device 620, for example, as a touchscreen or similar touch-sensitive display. In some embodiments, the input device 615 includes a touchscreen such that text may be input using a virtual keyboard displayed on the touchscreen and/or by handwriting on the touchscreen. In some embodiments, the input device 615 includes two or more different devices, such as a keyboard and a touch panel.

The output device 620, in one embodiment, is designed to output visual, audible, and/or haptic signals. In some embodiments, the output device 620 includes an electronically controllable display or display device capable of outputting visual data to a user. For example, the output device 620 may include, but is not limited to, a Liquid Crystal Display ("LCD"), a Light-Emitting Diode ("LED") display, an Organic LED ("OLED") display, a projector, or similar display device capable of outputting images, text, or the like to a user. As another, non-limiting, example, the output device 620 may include a wearable display separate from, but communicatively coupled to, the rest of the user equipment apparatus 600, such as a smart watch, smart glasses, a heads-up display, or the like. Further, the output device 620 may be a component of a smart phone, a personal digital assistant, a television, a table computer, a notebook (laptop) computer, a personal computer, a vehicle dashboard, or the like.

In certain embodiments, the output device 620 includes one or more speakers for producing sound. For example, the output device 620 may produce an audible alert or notification (e.g., a beep or chime). In some embodiments, the output device 620 includes one or more haptic devices for producing vibrations, motion, or other haptic feedback. In some embodiments, all or portions of the output device 620 may be integrated with the input device 615. For example, the input device 615 and output device 620 may form a touchscreen or similar touch-sensitive display. In other embodiments, the output device 620 may be located near the input device 615.

The transceiver 625 communicates with one or more network functions of a mobile communication network via one or more access networks. The transceiver 625 operates under the control of the processor 605 to transmit messages, data, and other signals and also to receive messages, data, and other signals. For example, the processor 605 may selectively activate the transceiver 625 (or portions thereof) at particular times in order to send and receive messages.

The transceiver 625 includes at least transmitter 630 and at least one receiver 635. One or more transmitters 630 may be used to provide UL communication signals to a base unit 121, such as the UL transmissions described herein. Similarly, one or more receivers 635 may be used to receive DL communication signals from the base unit 121, as described herein. Although only one transmitter 630 and one receiver 635 are illustrated, the user equipment apparatus 600 may have any suitable number of transmitters 630 and receivers 635. Further, the transmitter(s) 630 and the receiver(s) 635 may be any suitable type of transmitters and receivers. In one embodiment, the transceiver 625 includes a first transmitter/receiver pair used to communicate with a mobile communication network over licensed radio spectrum and a second transmitter/receiver pair used to communicate with a mobile communication network over unlicensed radio spectrum.

In certain embodiments, the first transmitter/receiver pair used to communicate with a mobile communication network over licensed radio spectrum and the second transmitter/receiver pair used to communicate with a mobile communication network over unlicensed radio spectrum may be combined into a single transceiver unit, for example a single chip performing functions for use with both licensed and unlicensed radio spectrum. In some embodiments, the first transmitter/receiver pair and the second transmitter/receiver pair may share one or more hardware components. For example, certain transceivers 625, transmitters 630, and receivers 635 may be implemented as physically separate components that access a shared hardware resource and/or software resource, such as for example, the network interface 640.

In various embodiments, one or more transmitters 630 and/or one or more receivers 635 may be implemented and/or integrated into a single hardware component, such as a multi-transceiver chip, a system-on-a-chip, an Application-Specific Integrated Circuit ("ASIC"), or other type of hardware component. In certain embodiments, one or more transmitters 630 and/or one or more receivers 635 may be implemented and/or integrated into a multi-chip module. In some embodiments, other components such as the network interface 640 or other hardware components/circuits may be integrated with any number of transmitters 630 and/or receivers 635 into a single chip. In such embodiment, the transmitters 630 and receivers 635 may be logically configured as a transceiver 625 that uses one more common control signals or as modular transmitters 630 and receivers 635 implemented in the same hardware chip or in a multi-chip module.

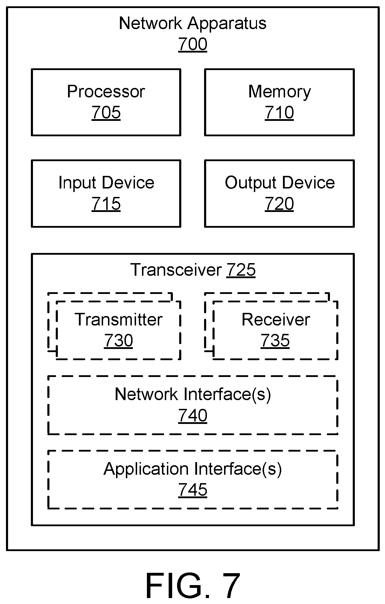

Figure 7 depicts a network apparatus 700 that may be used for deriving analytics for UE mobility events, according to embodiments of the disclosure. In one embodiment, network apparatus 700 may be one implementation of an analytics unit such as the NWDAF 145 and/or NWDAF 205, as described above. Furthermore, the base network apparatus 700 may include a processor 705, a memory 710, an input device 715, an output device 720, and a transceiver 725.

In some embodiments, the input device 715 and the output device 720 are combined into a single device, such as a touchscreen. In certain embodiments, the network apparatus 700 may not include any input device 715 and/or output device 720. In various embodiments, the network apparatus 700 may include one or more of: the processor 705, the memory 710, and the transceiver 725, and may not include the input device 715 and/or the output device 720.

As depicted, the transceiver 725 includes at least one transmitter 730 and at least one receiver 735. Here, the transceiver 725 may communicates with one or more remote units 105. Additionally, the transceiver 725 may support at least one network interface 740 and/or application interface 745. The application interface(s) 745 may support one or more APIs. The network interface(s) 740 may support 3GPP reference points, such as Uu, N1, N2 and N3. Other network interfaces 740 may be supported, as understood by one of ordinary skill in the art.

The processor 705, in one embodiment, may include any known controller capable of executing computer-readable instructions and/or capable of performing logical operations. For example, the processor 705 may be a microcontroller, a microprocessor, a CPU, a GPU, an auxiliary processing unit, a FPGA, or similar programmable controller. In some embodiments, the processor 705 executes instructions stored in the memory 710 to perform the methods and routines described herein. The processor 705 is communicatively coupled to the memory 710, the input device 715, the output device 720, and the transceiver 725.

In various embodiments, the network apparatus 700 is a RAN node (e.g., gNB) that communicates with one or more UEs, as described herein. In such embodiments, the processor 705 controls the network apparatus 700 to perform the above described RAN behaviors. When operating as a RAN node, the processor 705 may include an application processor (also known as "main processor") which manages application-domain and operating system ("OS") functions and a baseband processor (also known as "baseband radio processor") which manages radio functions.

In various embodiments, the processor 705 controls the apparatus 700 to implement the above NWDAF functions. In some embodiments, the transceiver 725 receives (e.g., via a network interface 740) a first request for analytics (e.g., via a network interface). Here, the first request (i.e., analytics request) indicates a first set of requirements for User Equipment ("UE") mobility including a minimum distance and a specific time period requirement. As discussed above with reference to Figures 3-5, the first request may include analytics filters that indicate motion/mobility events. The first set of requirements may include parameters of Target Area, Time of day, and a Target UE (e.g., a single/specific UE, a group of UEs, or any UE in the Target Area).

The processor 705 identifies a set of UEs for which to retrieve location data for mobility events based on the first set of requirements. As noted above, the first request may include a Target UE parameter with a list of one or more UEs. However, the Target UE parameter may also indicate "Any UE," in which case the set of UEs must be identified using other information. The processor 705 retrieves location data for the identified set of UEs for mobility events that satisfy the minimum distance requirement and the specific time period requirement. The processor 705 additionally derives analytics data (i.e., analytics output) based on the first request.

In some embodiments, the first request is a UE Mobility Analytics request. In some embodiments, the first request includes an analytics filter that indicates mobility events for motion based on the first set of requirements. In one embodiment, the location data for mobility events is retrieved via a GMLC. In another embodiment, the location data for mobility events is retrieved via an AMF by invoking the *Namf_ProvideLocationInfo* service request.

In some embodiments, the first request includes a target area for any UEs that is located in the target area. In such embodiments, identifying the set of UEs includes determining a list of UEs within the target area that satisfy the first set of requirements. In certain embodiments, deriving analytics data based on the first request includes determining a subset of UEs that satisfy the first set of requirements within the target area and deriving analytics data for only the subset of UEs based on the first request.

In certain embodiments, determining the subset of UEs includes: retrieving from an AMF a first set of UEs that are served in the target area and sending a second request (e.g., to GMLC or AMF) to retrieve location information from the first set of UEs, where the second request includes the first set of requirements. Here, determining the subset of UEs further includes identifying the subset of UEs from the retrieved location information that satisfy the first set of requirements for UE mobility.

In some embodiments, the first request includes a list of Target UEs. In such embodiments, retrieving the location data includes sending a second request (e.g., to GMLC or AMF) to retrieve location information from the list of Target UEs, where the second request includes the first set of requirements. In such embodiments, deriving the analytics data includes deriving analytics data only for a subset of UEs that satisfy the first set of requirements for UE mobility, the subset being identified from the retrieved location information.

In some embodiments, the first request includes an indication to provide analytics data only for UEs that are in motion for a minimum distance at a specific time interval. In such embodiments, deriving the analytics data includes: A) determining a subset of UEs that are in motion for the minimum distance at the specific time interval and B) deriving analytics data for only the subset of UEs based on the first request.

In some embodiments, the first request includes an indication to provide analytics only for UEs that are located in a target zone (or sub-set area) within a target area and the minimum distance requirement includes a threshold linear distance based on the target zone. In such embodiments, the processor 705 determines UEs that are located in a target zone by sending a second request (e.g., to GMLC or AMF) to retrieve location information, where the second request includes the threshold linear distance, and identifying a subset UEs that report location information within the target zone of the target area. In such embodiments, deriving analytics data based on the first request includes deriving analytics data for only the subset of the UEs.

In some embodiments, the minimum distance requirement includes a threshold linear distance before a UE reports a location, where cumulative UE movement that exceeds the threshold linear distance triggers a location report from a UE. In some embodiments, the set of UEs is indicated by the first request. In some embodiments, the first request indicates: a minimum time interval between successive location event reports, a maximum time interval between successive location event reports, and a maximum event sampling interval.

In some embodiments, the analytics data includes location statistics indicating one or more of: a Start Location, an End Location, an Average Distance Taken, and a Time of motion. In some embodiments, the analytics data includes location predictions indicating one or more of: an expected Start Location, an expected End Location, an expected Average Distance Taken, an expected Time of motion, and a confidence level.

The memory 710, in one embodiment, is a computer readable storage medium. In some embodiments, the memory 710 includes volatile computer storage media. For example, the memory 710 may include a RAM, including dynamic RAM ("DRAM"), synchronous dynamic RAM ("SDRAM"), and/or static RAM ("SRAM"). In some embodiments, the memory 710 includes non-volatile computer storage media. For example, the memory 710 may include a hard disk drive, a flash memory, or any other suitable non-volatile computer storage device. In some embodiments, the memory 710 includes both volatile and non-volatile computer storage media.

In some embodiments, the memory 710 stores data related to mobile operation and/or deriving analytics for UE mobility events. For example, the memory 710 may store parameters, configurations, resource assignments, policies, and the like, as described above. In certain embodiments, the memory 710 also stores program code and related data, such as an operating system or other controller algorithms operating on the apparatus 700.

The input device 715, in one embodiment, may include any known computer input device including a touch panel, a button, a keyboard, a stylus, a microphone, or the like. In some embodiments, the input device 715 may be integrated with the output device 720, for example, as a touchscreen or similar touch-sensitive display. In some embodiments, the input device 715 includes a touchscreen such that text may be input using a virtual keyboard displayed on the touchscreen and/or by handwriting on the touchscreen. In some embodiments, the input device 715 includes two or more different devices, such as a keyboard and a touch panel.

The output device 720, in one embodiment, is designed to output visual, audible, and/or haptic signals. In some embodiments, the output device 720 includes an electronically controllable display or display device capable of outputting visual data to a user. For example, the output device 720 may include, but is not limited to, an LCD display, an LED display, an OLED display, a projector, or similar display device capable of outputting images, text, or the like to a user. As another, non-limiting, example, the output device 720 may include a wearable display separate from, but communicatively coupled to, the rest of the network apparatus 700, such as a smart watch, smart glasses, a heads-up display, or the like. Further, the output device 720 may be a component of a smart phone, a personal digital assistant, a television, a table computer, a notebook (laptop) computer, a personal computer, a vehicle dashboard, or the like.

In certain embodiments, the output device 720 includes one or more speakers for producing sound. For example, the output device 720 may produce an audible alert or notification (e.g., a beep or chime). In some embodiments, the output device 720 includes one or more haptic devices for producing vibrations, motion, or other haptic feedback. In some embodiments, all or portions of the output device 720 may be integrated with the input device 715. For example, the input device 715 and output device 720 may form a touchscreen or similar touch-sensitive display. In other embodiments, the output device 720 may be located near the input device 715.

The transceiver 725 includes at least transmitter 730 and at least one receiver 735. One or more transmitters 730 may be used to communicate with the UE, as described herein. Similarly, one or more receivers 735 may be used to communicate with network functions in the PLMN and/or RAN, as described herein. Although only one transmitter 730 and one receiver 735 are illustrated, the network apparatus 700 may have any suitable number of transmitters 730 and receivers 735. Further, the transmitter(s) 730 and the receiver(s) 735 may be any suitable type of transmitters and receivers.

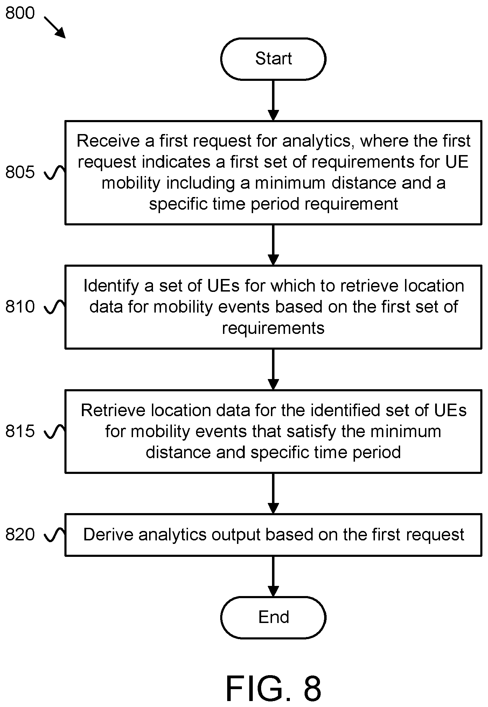

Figure 8 depicts one embodiment of a method 800 for deriving analytics for UE mobility events, according to embodiments of the disclosure. In various embodiments, the method 800 is performed by an analytics unit, such as the NWDAF 145, NWDAF 205, and/or the network apparatus 700, described above as described above. In some embodiments, the method 800 is performed by a processor, such as a microcontroller, a microprocessor, a CPU, a GPU, an auxiliary processing unit, a FPGA, or the like.

The method 800 begins and receives 805 a first request for analytics, where the first request indicates a first set of requirements for UE mobility including a minimum distance and a specific time period requirement. The method 800 includes identifying 810 a set of UEs for which to retrieve location data for mobility events based on the first set of requirements. The method 800 includes retrieving 815 location data for the identified set of UEs for mobility events that satisfy the minimum distance and specific time period. The method 800 includes deriving 820 analytics output based on the first request. The method 800 ends.

Disclosed herein is a first apparatus for deriving analytics for UE mobility events, according to embodiments of the disclosure. The first apparatus may be implemented by an analytics unit, such as the NWDAF 145, NWDAF 205, and/or the network apparatus 700, described above. The first apparatus includes a processor and a transceiver that receives a first request for analytics (e.g., via a network interface). Here, the first request indicates a first set of requirements for User Equipment ("UE") mobility including a minimum distance and a specific time period requirement.

The processor identifies a set of UEs for which to retrieve location data for mobility events based on the first set of requirements and retrieves location data for the identified set of UEs for mobility events that satisfy the minimum distance and the specific time period. The processor additionally derives analytics output based on the first request.

In some embodiments, the first request is a UE mobility Analytics request. In some embodiments, the first request includes an analytics filter that indicates mobility events for motion based on the first set of requirements. In one embodiment, the location data for mobility events is retrieved via a GMLC. In another embodiment, the location data for mobility events is retrieved via an AMF by invoking a Namf_ ProvideLocationInfo service request.

In some embodiments, the first request includes a target area for any UEs that is located in the target area. In such embodiments, identifying the set of UEs includes determining a list of UEs within the target area that satisfy the first set of requirements. In certain embodiments, deriving the analytics output based on the first request includes determining a subset of UEs that satisfy the first set of requirements within the target area and deriving analytics output for only the subset of UEs based on the first request.

In certain embodiments, determining the subset of UEs includes retrieving from an AMF a first set of UEs that are served in the target area and sending a second request (e.g., to GMLC or AMF) to retrieve location information from the first set of UEs, where the second request includes the first set of requirements. Determining the subset of UEs further includes identifying the subset of UEs from the retrieved location information that satisfy the first set of requirements for UE mobility.

In some embodiments, the first request includes a list of Target UEs. In such embodiments, retrieving the location data includes sending a second request (e.g., to GMLC or AMF) to retrieve location information from the list of Target UEs, where the second request includes the first set of requirements. In such embodiments, deriving the analytics output includes deriving analytics only for a subset of UEs that satisfy the first set of requirements for UE mobility, the subset being identified from the retrieved location information.

In some embodiments, the first request includes an indication to provide analytics only for UEs that are in motion for a minimum distance at a specific time interval. In such embodiments, deriving the analytics output includes: A) determining a subset of UEs that are in motion for the minimum distance at the specific time interval and B) deriving analytics output for only the subset of UEs based on the first request.

In some embodiments, the first request includes an indication to provide analytics only for UEs that are located in a target zone (or sub-set area) within a target area and the minimum distance requirement includes a threshold linear distance based on the target zone. In such embodiments, the processor determines UEs that are located in a target zone by sending a second request (e.g., to GMLC or AMF) to retrieve location information, where the second request includes the threshold linear distance, and identifying a subset UEs that report location information within the target zone of the target area. In such embodiments, deriving analytics output based on the first request includes deriving analytics output for only the subset of the UEs.

In some embodiments, the minimum distance requirement includes a threshold linear distance before a UE reports a location, where cumulative UE movement that exceeds the threshold linear distance triggers a location report from a UE. In some embodiments, the set of UEs is indicated by the first request. In some embodiments, the first request indicates: a minimum time interval between successive location event reports, a maximum time interval between successive location event reports, and a maximum event sampling interval.

In some embodiments, the analytics output includes location statistics indicating one or more of: a Start Location, an End Location, an Average Distance Taken, and a Time of motion. In some embodiments, the analytics output includes location predictions indicating one or more of: an expected Start Location, an expected End Location, an expected Average Distance Taken, an expected Time of motion, and a confidence level.

Disclosed herein is a first method for deriving analytics for UE mobility events, according to embodiments of the disclosure. The first method may be performed by an analytics unit, such as the NWDAF 145, NWDAF 205, and/or the network apparatus 700, described above. The first method includes receiving a first request for analytics, wherein the first request indicates a first set of requirements for UE mobility including a minimum distance and a specific time period requirement. The first method includes identifying a set of UEs for which to retrieve location data for mobility events based on the first set of requirements and retrieving location data for the identified set of UEs for mobility events that satisfy the minimum distance and the specific time period. The first method includes deriving analytics output based on the first request.

In some embodiments, the first request is a UE mobility Analytics request. In some embodiments, the first request includes an analytics filter that indicates mobility events for motion based on the first requirement. In one embodiment, the location data for mobility events is retrieved via a GMLC. In another embodiment, the location data for mobility events is retrieved via an AMF by invoking a Namf_ ProvideLocationInfo service request.

In some embodiments, the first request includes a target area for any UEs that is located in the target area. In such embodiments, identifying the set of UEs includes determining a list of UEs within the target area that satisfy the first set of requirements. In certain embodiments, deriving analytics output based on the first request includes determining a subset of UEs that satisfy the first set of requirements within the target area and deriving analytics output for only the subset of UEs based on the first request.

In certain embodiments, determining the subset of UEs includes: retrieving from an AMF a first set of UEs that are served in the target area and sending a second request (e.g., to GMLC or AMF) to retrieve location information from the first set of UEs, where the second request includes the first set of requirements. Determining the subset of UEs further includes identifying the subset of UEs from the retrieved location information that satisfy the first set of requirements for UE mobility.

In some embodiments, the first request includes a list of Target UEs. In such embodiments, retrieving the location data includes sending a second request (e.g., to GMLC or AMF) to retrieve location information from the list of Target UEs, where the second request includes the first set of requirements. In such embodiments, deriving the analytics output includes deriving analytics output only for a subset of UEs that satisfy the first set of requirements for UE mobility, the subset being identified from the retrieved location information.

In some embodiments, the first request includes an indication to provide analytics only for UEs that are in motion for a minimum distance at a specific time interval. In such embodiments, deriving the analytics includes: A) determining a subset of UEs that are in motion for the minimum distance at the specific time interval and B) deriving analytics output for only the subset of UEs based on the first request.

In some embodiments, the first request includes an indication to provide analytics only for UEs that are located in a target zone (or sub-set area) within a target area and the minimum distance requirement includes a threshold linear distance based on the target zone. In such embodiments, the first method includes determining UEs that are located in a target zone by sending a second request (e.g., to GMLC or AMF) to retrieve location information, where the second request includes the threshold linear distance, and identifying a subset UEs that report location information within the target zone of the target area. In such embodiments, deriving analytics output based on the first request comprises deriving analytics output for only the subset of the UEs.

In some embodiments, the minimum distance requirement includes a threshold linear distance before a UE reports a location, where cumulative UE movement that exceeds the threshold linear distance triggers a location report from a UE. In some embodiments, the set of UEs is indicated by the first request. In some embodiments, the first request indicates: a minimum time interval between successive location event reports, a maximum time interval between successive location event reports, and a maximum event sampling interval.

In some embodiments, the analytics output includes location statistics indicating one or more of: a Start Location, an End Location, an Average Distance Taken, and a Time of motion. In some embodiments, the analytics output includes location predictions indicating one or more of: an expected Start Location, an expected End Location, an expected Average Distance Taken, an expected Time of motion, and a confidence level.

Embodiments may be practiced in other specific forms. The described embodiments are to be considered in all respects only as illustrative and not restrictive. The scope of the invention is, therefore, indicated by the appended claims rather than by the foregoing description.

## Claims

1. An apparatus (205, 700) for network analytics, the apparatus (205, 700) comprising at least one memory (710) and at least one processor (705) coupled with the at least one memory (710) and configured to cause the apparatus (205, 700) to:
receive (503), from a network function, NF, consumer (210), a request for analytics, wherein the request for analytics requests analytics within a specific zone of a target area;
determine (505) a first list of user equipment, UEs, served in the target area;
request (509) location data from a Gateway Mobile Location Center, GMLC, (401);
receive (509) the location data from the GMLC (401);
determine (507), from the location data received from the GMLC (401), a second list of UEs that are in the specific zone of the target area; and
derive (513) analytics for the second list of UEs that are within the specific zone of the target area.

2. The apparatus (205, 700) according to claim 1, wherein the at least one processor (705) is configured to cause the apparatus (205, 700) to report (515) the analytics to the NF consumer (210).

3. The apparatus (205, 700) according to claim 1, wherein the request for analytics identifies UEs in the specific zone within the target area by indicating a maximum radius of the zone.

4. The apparatus (205, 700) according to claim 1, wherein the at least one processor (705) is configured to cause the apparatus (205, 700) to request (509) location data from the GMLC (401) by including a Location Services, LCS, service request.

5. A method performed by an apparatus (205, 700) for network analytics, the method comprising:
receiving (503), from a network function, NF, consumer (210), a request for analytics, wherein the request for analytics requests analytics within a specific zone of a target area;
determining (505) a first list of user equipment, UEs, served in the target area;
requesting (509) location data from a Gateway Mobile Location Center, GMLC, (401);
receiving (509) the location data from the GMLC (401);
determining (507), from the location data received from the GMLC (401), a second list of UEs that are in the specific zone of the target area; and
deriving (513) analytics for the second list of UEs that are within the specific zone of the target area.

6. The method according to claim 5, comprising reporting (515) the analytics to the NF consumer (210).

7. The method according to claim 5, wherein the request for analytics identifies UEs in the specific zone within the target area by indicating a maximum radius of the zone.

8. The method according to claim 5, wherein requesting (509) location data from the GMLC (401) comprises including a Location Services, LCS, service request.

## Patentansprüche

1. Eine Vorrichtung (205, 700) für Netzwerkanalysen, wobei die Vorrichtung (205, 700) mindestens einen Speicher (710) und mindestens einen Prozessor (705) umfasst, der mit dem mindestens einen Speicher (710) gekoppelt und dazu konfiguriert ist, die Vorrichtung (205, 700) zu veranlassen:
von einem Netzfunktions-, NF-, Verbraucher (210) eine Anforderung von Analysen zu empfangen (503), wobei die Anforderung von Analysen Analysen innerhalb einer bestimmten Zone eines Zielbereichs anfordert;
eine erste Liste von Benutzergeräten, UEs, zu bestimmen (505), die in dem Zielbereich versorgt werden;
Standortdaten von einem Gateway Mobile Location Center, GMLC, (401) anzufordern (509);
die Standortdaten von dem GMLC (401) zu empfangen (509);
aus den von dem GMLC (401) empfangenen Standortdaten eine zweite Liste von UEs zu bestimmen (507), die sich in der bestimmten Zone des Zielbereichs befinden; und
Analysen für die zweite Liste von UEs abzuleiten (513), die sich innerhalb der bestimmten Zone des Zielbereichs befinden.

2. Vorrichtung (205, 700) nach Anspruch 1, wobei der mindestens eine Prozessor (705) dazu konfiguriert ist, die Vorrichtung (205, 700) zu veranlassen, die Analysen an den NF-Verbraucher (210) zu melden (515).

3. Vorrichtung (205, 700) nach Anspruch 1, wobei die Anforderung von Analysen UEs in der bestimmten Zone innerhalb des Zielbereichs durch Angabe eines maximalen Radius der Zone identifiziert.

4. Vorrichtung (205, 700) nach Anspruch 1, wobei der mindestens eine Prozessor (705) dazu konfiguriert ist, die Vorrichtung (205, 700) zu veranlassen, Standortdaten von dem GMLC (401) durch Einbeziehen einer Location-Services-, LCS-, Dienstanforderung anzufordern (509).

5. Verfahren, das von einer Vorrichtung (205, 700) für Netzwerkanalysen durchgeführt wird, das Verfahren umfassend:
Empfangen (503) einer Anforderung von Analysen von einem Netzfunktions-, NF-, Verbraucher (210), wobei die Anforderung von Analysen Analysen innerhalb einer bestimmten Zone eines Zielbereichs anfordert;
Bestimmen (505) einer ersten Liste von Benutzergeräten, UEs, die in dem Zielbereich versorgt werden;
Anfordern (509) von Standortdaten von einem Gateway Mobile Location Center, GMLC, (401);
Empfangen (509) der Standortdaten von dem GMLC (401);
Bestimmen (507) einer zweiten Liste von UEs aus den von dem GMLC (401) empfangenen Standortdaten, die sich in der bestimmten Zone des Zielbereichs befinden; und
Ableiten (513) von Analysen für die zweite Liste von UEs, die sich innerhalb der bestimmten Zone des Zielbereichs befinden.

6. Verfahren nach Anspruch 5, umfassend das Melden (515) der Analysen an den NF-Verbraucher (210).

7. Verfahren nach Anspruch 5, wobei die Anforderung von Analysen UEs in der bestimmten Zone innerhalb des Zielbereichs durch Angabe eines maximalen Radius der Zone identifiziert.

8. Verfahren nach Anspruch 5, wobei das Anfordern (509) von Standortdaten von dem GMLC (401) das Einbeziehen einer Location-Services-, LCS-, Dienstanforderung umfasst.

## Revendications

1. Appareil (205, 700) d'analyse de réseau, l'appareil (205, 700) comprenant au moins une mémoire (710) et au moins un processeur (705) couplé à l'au moins une mémoire (710) et configuré pour amener l'appareil (205, 700) à :
recevoir (503), en provenance d'un consommateur de fonction réseau, NF (pour « Network Function »), (210), une requête d'analyse, la requête d'analyse portant sur une analyse au sein d'un zonage spécifique d'une zone cible ;
déterminer (505) une première liste d'équipements utilisateurs, UE, desservis dans la zone cible ;
demander (509) des données de localisation en provenance d'un centre de localisation mobile de passerelle, GMLC (pour « Gateway Mobile Location Center »), (401) ;
recevoir (509) les données de localisation depuis le GMLC (401) ;
déterminer (507), à partir des données de localisation reçues du GMLC (401), une seconde liste d'UE se trouvant dans le zonage spécifique de la zone cible ; et
dériver (513) des analyses pour la seconde liste d'UE se trouvant dans le zonage spécifique de la zone cible.

2. Appareil (205, 700) selon la revendication 1, dans lequel l'au moins un processeur (705) est configuré pour amener l'appareil (205, 700) à communiquer (515) les analyses au consommateur de NF (210).

3. Appareil (205, 700) selon la revendication 1, dans lequel la requête d'analyse identifie les UE dans le zonage spécifique au sein de la zone cible en indiquant un rayon maximal du zonage.

4. Appareil (205, 700) selon la revendication 1, dans lequel l'au moins un processeur (705) est configuré pour amener l'appareil (205, 700) à demander (509) des données de localisation en provenance du GMLC (210) en incluant une requête de service de services de localisation, LCS (pour « Location Services »).

5. Procédé réalisé par un appareil (205, 700) d'analyse de réseau, le procédé comprenant :
la réception (503), en provenance d'un consommateur de fonction réseau, NF (pour « Network Function »), (210), d'une requête d'analyse, la requête d'analyse portant sur une analyse au sein d'un zonage spécifique d'une zone cible ;
la détermination (505) d'une première liste d'équipements utilisateurs, UE, desservis dans la zone cible ;
la demande (509) de données de localisation en provenance d'un centre de localisation mobile de passerelle, GMLC (pour « Gateway Mobile Location Center »), (401) ;
la réception (509) des données de localisation depuis le GMLC (401) ;
la détermination (507), à partir des données de localisation reçues du GMLC (401), d'une seconde liste d'UE se trouvant dans le zonage spécifique de la zone cible ; et
le fait de dériver (513) des analyses pour la seconde liste d'UE se trouvant dans le zonage spécifique de la zone cible.

6. Procédé selon la revendication 5, comprenant le fait de communiquer (515) les analyses au consommateur de NF (210).

7. Procédé selon la revendication 5, dans lequel la requête d'analyse identifie les UE dans le zonage spécifique au sein de la zone cible en indiquant un rayon maximal du zonage.

8. Procédé selon la revendication 5, dans lequel la demande (509) de données de localisation en provenance du GMLC (401) comprend le fait d'inclure une requête de service de services de localisation, LCS (pour « Location Services »).
